Europäisches Patentamt

European Patent Office    (11) Numéro de publication:    **0 395 564**

Office européen des brevets                              **A2**

(12)                    **DEMANDE DE BREVET EUROPEEN**

(21) Numéro de dépôt: 90500041.0          (51) Int. Cl.5: **A47J 31/44**

(22) Date de dépôt: **16.04.90**

(30) Priorité: **17.04.89 ES 8901338**          (71) Demandeur: **FUTURMAT COMERCIAL DE HOSTELERIA, S.A.**
                                                **Paseo Zona Franca 68-80**
(43) Date de publication de la demande:          **E-08004 Barcelona(ES)**
    **31.10.90 Bulletin 90/44**
                                                (72) Inventeur: **Gil de Miguel, José Miguel**
(84) Etats contractants désignés:                **Ronda Canigo No. 7 Urbanizacion La Mayola**
    **AT BE CH DE ES FR GB GR IT LI LU NL SE**   **E-08950 Esplugas de Llobregat**
                                                **Barcelona(ES)**

                                                (74) Mandataire: **Manresa Val, Manuel**
                                                **Gerona n. 34**
                                                **E-08010 Barcelona(ES)**

(54) **Perfectionnements dans une machine à café sous pression.**

(57) Perfectionnements dans une machine à café sous pression, consistant en l'agencement d'un panneau avant qui comporte une série de commandes, formé par un profil allongé avec une aile double à rebord, soutenu en montage pivotant aux flancs du bâti de la machine et associé à des moyens de verrouillement qui le fixent, en bloquant dans ladite position ou en empêchant l'accès à des moyens qui rendent possible un démontage de condition indépendante du plateau supérieur, pour le stockage de tasses et des panneaux latéraux, la machine comportant des moyens électriques ou électroniques pour le contrôle de ladite situation de blocage de la machine.

Fig.1

EP 0 395 564 A2

Le présent brevet d'invention consiste en des perfectionnements dans une machine café sous pression affectant fondamentalement l'ensemble de la carcasse de ladite machine, qui est démontable en grande partie, plus concrètement en ce qui concerne ses panneaux latéraux et plaque supérieure constituant une console pour le stockage de tasses, de façon indépendante et la machine comportant des moyens de blocage des diverses parties après la libération desquelles il est possible d'avoir accès à n'importe quel point de l'intérieur de la carcasse quel que soit l'emplacement de la machine dans le point d'installation tout cela ayant pour résultat un coût d'entretien bien meilleur marché, car les tâches précises sont simplifiées étant donné que l'opérateur peut arriver commodément jusqu'à n'importe quelle partie de la machine.

L'invention est caractérisée fondamentalement en ce que la machine dispose d'un panneau avant où est adossée une série de commandes, disposé en montage pivotant par rapport aux latéraux du bâti de la machine et retenu par des moyens de verrouillement qui peuvent être libérés, le panneau bloquant le reste des parties mobiles citées de la carcasse.

Par ailleurs, la machine proposée comporte des moyens électriques ou électroniques de détection de la condition déverouillée du panneau avant qui agit comme un registre d'incidences.

Comme antécédents de l'nvention, nous pouvons citer les brevets fançais 7627040 (Bureau Cimbali Giuseppe S.p.A.) et 1382.674 (Giacomini) et la demande de brevet du même titulaire N. 8703175. quoique la réalisation et les parties composantes qui sont proposées ici sont sensiblement différentes de ce qui est exposé dans le brevet qui précède.

Pour une meilleure compréhension de l'objet de l'invention et si l'on tient compte du caractère technico-opérationnel de ses éléments les plus caractéristiques, on en développera l'explication à l'aide de pages de dessins où on a représenté une réalisation possible d'une machine pour la préparation de café, comportant lesdits perfectionnements.

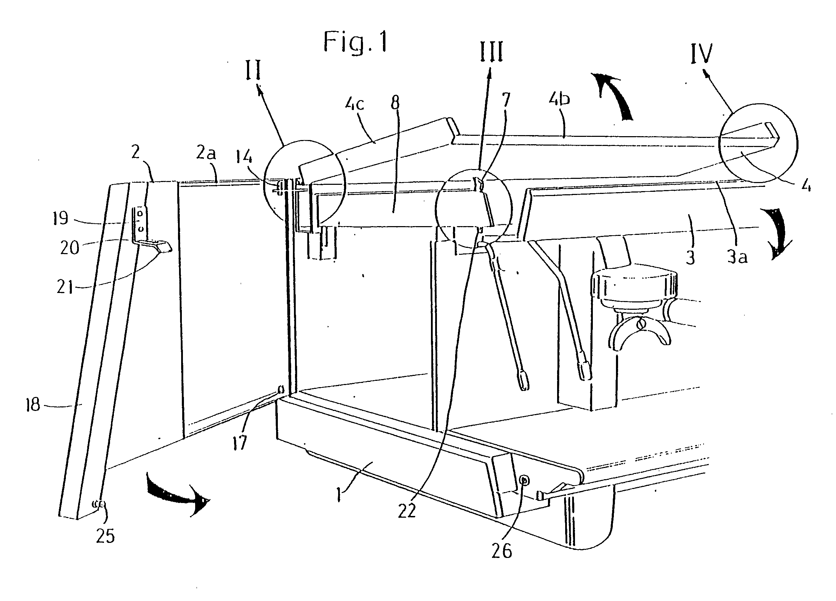

Dans lesdits dessins la figure 1 montre l'ensemble de la machine en perspective avec des flèches qui indiquent la direction de mouvement possible du panneau avant de blocage général, de la console supérieure de stockage des tasses et d'un des panneaux latéraux, avec le détail de la plupart des éléments que propose l'invention ainsi que leur interrelation fonctionnelle spécifique.

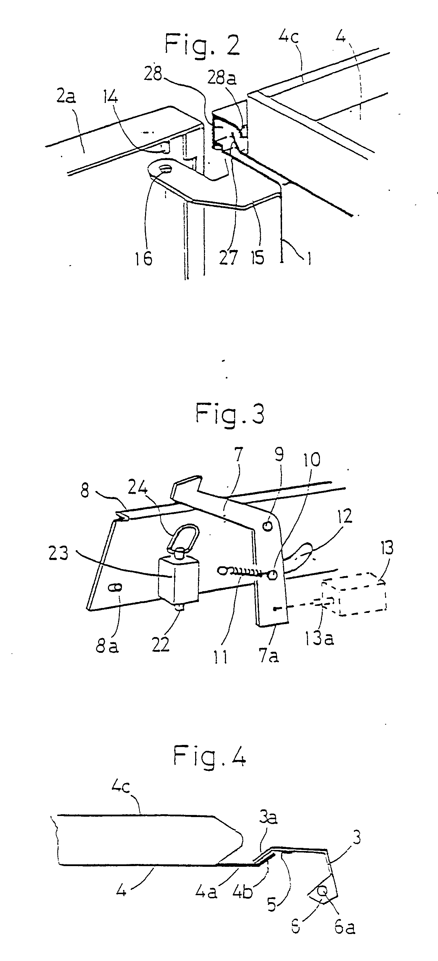

Pour une plus facile interprétation des solutions techniques invoquées, on a représenté aux figures 2, 3 et 4, les détails en plus grand correspondant aux zones marquées par un cercle et indiquées avec les références II, III et IV, respectivement, à ladite figure 1.

Dans la première de ces figures, on nous indique la condition démontable en ouverture des panneaux latéraux -2-, fixés par des charnières par leur arête postérieure au bâti -1- de la machine, ainsi que la possibilité de séparer la plaque-plateau supérieure -4- pour le stockage de tasses une fois que l'on a levé et fait basculer vers le bas un profil avant -3- à mode de corniche portant des commandes qui n'ont pas été représentées et formé par un profil en V très ouvert.

Conformément ce qui a été expliqué, ledit panneau avant -3- reste associé en agencement basculant aux flancs du bâti, concrètement soutenu par l'introduction dans les orifices -6a- d'ailettes -6- situées aux extrémités dudit panneau -3-, dans des pivots -8a-dérivant des flancs avant des longerons -8-, du bâti -1-. En situation de fermeture le panneau -3- bloque la console porte-tasses -4-, par superposition d'un rebord -3a- qui finit son bord libre sur une portion -4b-orientée en élévation qui finit une partie prolongée -4a- du plan du plateau-console -4-, et qui s'étend au- delà des parois latérales -4c- de ladite plaque supérieure -4-.

Ledit panneau avant -3- présente sur sa face interne et au voisinage de son arête libre -3a- et sur sa face interne un profil en L inversé -5- coopérant avec des détentes -7-, d'ancrage, montées sur la face interne des longerons -8- du bâti -1- et qui comprennent un axe -9-de pivotement et un tenon -10- qui traverse sa section, dont une des extrémités est reliée à un ressort -11- et l'autre insérée dans un creux à trajectoire courbe -12-, qui afaiblit le déplacement angulaire possible de ladite détente. Ces détentes possèdent une portion -7a-qui s'étendent vers le bas et qui permettra de l'élever en libérant alors le panneau -3-, qui bloque l'ensemble de parties mobiles de la carcasse de la machine. En général l'extrémité -7a- des détentes -7- restera associée à la tige -13a- d'un dispositif -13- activé électriquement tel qu'un électro-aimant.

Quoiqu'ils n'ont pas été représentés sur le panneau -3-, il existera un contact électrique relié à un câblage et, à un des points d'appui sur le plateau un autre contact qui sera conduit par un câble à un point du bâti où repose ledit plateau, en fermant la superposition desdits contacts par un circuit avec lequel on détecte la situation de fermeture-blocage de la machine.

L'interrelation entre les panneaux latéraux -2- et le bâti -1- est clairement visible sur les figures 1 et 2, et l'on peut apprécier que lesdits panneaux -2-, fixés par des charnières par leur arete arrière, sont associés de façon démontable audit bâti, par simple élévation dudit profil de fixation par charnière qui est possible à partir d'un petit angle d'ouverture du panneau.

## Revendications

1.- Perfectionnements dans une machine café sous pression, caractérisés en ce que la plaque supérieure horizontale formant une console pour le stockage de tasses de la machine, se trouve immobilisée et retenue par son bord avant auquel est superposé le profil libre d'un panneau avant à mode de corniche, supportant une série de commandes, en faisant obstacle de plus à la position dudit panneau de commandes, à l'accès des moyens de fixation des panneaux latéraux de la machine, ledit panneau de commande étant soutenu sur deux latéraux du bâti de la machine, monté avec possibilité de basculement, mais verrouillé par des éléments de fixation, pouvant être libérés à la main ou automatiquement, en obtenant ainsi une possibilité de démontage indépendant, desdits panneaux latéraux ou plaque supérieure et un accès aux connexions des commandes établies à l'arrière du panneau avant, la machine comportant des moyens électriques ou électroniques de détection de la condition déverrouillée du panneau avant, pour l'enregistrement d'incidences.

2.- Perfectionnements, selon la revendication 1, caractérisés en ce que le panneau avant portant les commandes associé en agencement basculant aux flancs du bâti et qui bloque en situation normale la console porte-tasses, adopte un développement d'après un profil en V très ouvert, ayant un rebord à hauteur uniforme sur ses côtés les plus grands, en présentant à l'intérieur solidaire près de ce rebord libre un profil en L inversée, coopérant avec des détentes d'ancrage chargées élastiquement, pivotantes, à course angulaire limitée par un pivot latéral qui joue dans une rainure,disposées à la partie avant, sur le côté intérieur des longerons latéraux supérieurs du bâti, dont les détentes d'ancrage possèdent une portion qui s'étend vers la partie basse pour permettre son actionnement et déverrouiller ledit panneau.

3.- Perfectionnements, selon la revendication 1, caractérisés en ce que l'extrémité libre, inférieure, des détentes d'ancrage du panneau avant reste associée à la tige d'un dispositif activé électriquement, tel qu'un électro-aimant.

4.- Perfectionnements, selon la revendication 1, caractérisés en ce que la machine dispose de contacts électriques dans une partie du bâti et sur le panneau basculant, pour la détection de la situation de blocage de l'ensemble d'éléments de la carcasse à la demande dudit panneau et détection d'ouvertures éventuelles.

5.- Perfectionnements, selon la revendication 1, caractérisés en ce que les panneaux latéraux de la machine restent fixés par des charnières par leur arête verticale arrière au bâti de ladite machine, de façon démontable par élévation, à partir d'un petit angle d'ouverture du panneau et sont fixés en leur partie avant par un agencement de targette bloquant sa section haute, et un verrouillement d'embranchement, par un élément axial à nature flexible, à sa partie basse.

6.- Perfectionnements, selon la revendication 1, caractérisés en ce que lesdits panneaux latéraux sont formés par des pièces en tôle se terminant sur une partie de leurs arêtes supérieure et inférieure par des rebords pliés à 90 degrés, à hauteur uniforme, lesdits rebords présentant près de l'arête verticale arrière du panneau, à la partie supérieure, un pivot cylindrique s'inscrivant à travers l'orifice de l'extrémité d'une lame horizontale de profil en L, orientée vers l'arrière, en encorbellement, solidaire du bâti et à la partie basse, sur la verticale dudit pivot le rebord a un orifice à travers lequel est insérée un tenon solidaire du montant inférieur de la carcasse.

7.- Perfectionnements, selon la revendication 1, caractérisés en ce que l'arête avant de chacun des panneaux latéraux est finie par un profil à section rectangulaire orienté en inclinaison, de son latéral supérieur se dérive une pièce en L, avec sa branche horizontale en encorbellement portant un orifice et avec son extrémité coudée en inclinaison descendante, étant insérée dans cet orifice,en position fermée une targette à course verticale chargée élastiquement et muni d'un anneau de anse montée sur la zone avant d'un des longerons supérieurs latéraux du bati dont la targette est est soulevée en comprimant un ressort en poussant le bout de ladite pièce en L, ledit profil avant présentant sur la partie basse un tenon en matériau élastique qui peut se contracter avec son extrémité grossie et avec des entailles qui s'inscrivent à l'intérieur d'un passage circulaire défini sur le côté de la machine.

8.- Perfectionnements, selon la revendication 1, caractérisés en ce que la plaque supérieure couvrante constituant une console pour le stockage de tasses est disposée appuyée sur les longerons de flanc supérieurs du bâti de la machine et présentant sur leur paroi postérieure en coplanarité avec sa base un profil orienté en inclinaison ascendante qui est introduit et reste enfermé dans la situation horizontale de cette plaque-console couvrante au sein d'un canal existant à l'arrière de la machine formé en un profil en U solidaire d'un des longerons transversaux du bâti également sous forme de U ouvert vers l'arrière dont le canal présente l'embouchure rétrécie par un rebord plié qui la délimite.

9.- Perfectionnements, selon la revendication 1, caractérisés en ce que la console porte-tasses est prolongée en son arête avant par une partie laminaire qui après un pli doux est légèrement orientée en élévation et s'étend plus loin que les parois latérales de ladite console et sur le bord de laquelle est accroché le rebord du côté libre du panneau porteur de commandes.

10.- Perfectionnements, selon la revendication 1, caractérisés en ce que le panneau avant de retenue de la plaque-console de stockage de tasses présente à ses extrémités des rebords orientés vers sa face intérieure avec des orifices pour le montage pivotant de cet élément à un des longerons latéraux du bâti possédant des pivots insérables auxdits orifices.

Fig.1

Fig. 2

Fig. 3

Fig. 4